# EUROPÄISCHE PATENTSCHRIFT

(11) **EP 0 594 872 B1**
(45) Veröffentlichungstag und Bekanntmachung des Hinweises auf die Patenterteilung: **20.03.1996**
(21) Anmeldenummer: 92117797.8
(22) Anmeldetag: 19.10.1992
(51) Int. Cl.: E04B 2/74, E04H 1/12, F16B 7/04

(54) **Anordnung zur Erstellung von Wand- und/oder Deckenkonstruktionen, insbesondere im Messebau**
Assembly for the erection of wall and/or ceiling constructions, in particular in exhibition construction
Dispositif pour la fabrication de murs et/ou de plafonds, en particulier pour la construction des expositions

(43) Veröffentlichungstag der Anmeldung: 04.05.1994
(73) Patentinhaber: ISOGON Laden- und Messebausysteme GmbH, D-72829 Engstingen (DE)
(72) Erfinder: Harsch, Gerald, Dipl.-Ing., W-7440 Nürtingen (DE)
(74) Vertreter: Scheffler, Dietrich, Dipl.-Ing. Dr. Patentanwalt

(56) Entgegenhaltungen:
- WO-A-90/07652
- DE-A- 2 931 026
- DE-A- 3 119 817
- DE-A- 3 703 907
- DE-U- 9 106 365

## Beschreibung

Die Erfindung bezieht sich auf eine Anordnung nach dem Oberbegriff des Patentanspruchs 1.

Bei derartigen Anordnungen dienen Stützenprofile üblicherweise als zentrale Konstruktionselemente oder als Eckenkonstruktionselemente, von denen in bestimmten Winkeln zueinanderstehende Wände, bzw. Decken ihren Ausgang nehmen.

Die Wände oder Decken werden hierhei von als Hohlprofilzargen ausgebildeten Trägern gehalten, die jeweils mittels eines Spannschlosses an dem Stützenprofil angreifen. Hierdurch in einfacher Weise zu erstellende und zu variierende Wand- und/oder Deckenkonstruktionen, z. B. Messestände, sind in der Regel als gleichmäßige Viereck-, Sechseck- oder Achteck-Konstruktioner ausgebildet.

Eine Anordnung der eingangs bezeichneten Art offenbart die DE-OS 37 03 907, aus der Oberbegriff des Anspruchs 1 bereits bekannt ist und deren Gegenstand bereits eine Weiterentwicklung einer aus der DE-PS 29 31 026 entnehmbaren ähnlichen Anordnung ist.

Bei der bekannten Spannschloß-Konstruktion nach DE-PS 29 31 026 liegt ein Nachteil darin, daß zur Betätigung des Spannschlosses zwei bis drei Umdrehungen der als Schraube ausgebildeten Spannvorrichtung erforderlich sind. Hierdurch werden Montage- und Demontagezeiten der betreffenden Wand- oder Deckenkonstruktion nicht unerheblich verlängert. Bei unsachgemäßer (zu starker) Betätigung der Spannvorrichtung besteht außerdem die Gefahr, daß die Wände des in der Regel aus Aluminium gefertigten Trägers durch die gespreizten hinteren Enden der seitlichen Halteelemente so stark belastet werden, daß außen sichtbare Druckstellen an den Trägerwänden entstehen.

Weitere Nachteile des bekannten Spannschlosses nach DE-PS 29 31 026 sind darin zu sehen, daß infolge des losen mittleren Halteelements ein exaktes Positionieren der Hohlprofilzargen (Träger) beträchtlich erschwert wird, daß ferner die beiden seitlichen Halteelemente einseitig schließen, wodurch sich Verschiebungen des Spannschlosses und der von diesem gehaltenen Hohlprofilzarge eryeben, und daß ein genaues Zentrieren des Spannschlosses innerhalb der Hohlprofilzarge nicht möglich ist, weil das Spannschloß in Zargenlängsrichtung lediglich durch den Schraubenkopf der Spannvorrichtung fixiert wird. Da die beiden seitlichen Halteelemente des bekannten Spannschlosses sich nicht selbsttätig zurückstellen, wird überdies die Demontage der Hohlprofilzargen vom Stützenprofil erschwert.

Zwar ließen sich einige der vorgenannten Unzulänglichkeiten durch das bekannte Spannschloß nach DE-OS 37 03 907 vermeiden. Dieses ist jedoch aufgrund seiner speziellen Konstruktion der Spannvorrichtung praktisch nicht, jedenfalls nicht unter vertretbarem Kostenaufwand, zu realisieren. So besitzt nämlich die bekannte, als Exzenterkonstruktion konzipierte Spannvorrichtung einen metallischen Kern, der von einem Mantel aus Kunststoffmaterial umspritzt ist. In dem Kunststoffmantel ist eine Betätigungsnut eingearbeitet, die die beiden seitlichen Halteelemente jeweils außenseitig umfaßt. Der metallische Kern der bekannten Spannvorrichtung besteht aus zwei exzentrisch zueinander versetzten, jedoch einstückig verbundenen zylindrischen Elementen, von denen das eine den aus der Kunststoffummantelung herausragenden, als Innensechskant ausgestalteten Betätigungskopf und das andere eine innere Stütze für den zur Lagerung der Spannvorrichtung innerhalb des mittleren Halteelements und zur Betätigung der seitlichen Halteelemente dienenden Kunststoffmantel bildet. Außerdem weist das zweite zylindrische Element beidseitig angeformte Stützbünde auf, die sich zu beiden Seiten der Betätigungsnut erstrecken.

Der einer praktischen Anwendung des bekannten Spannschlosses nach DE-OS 37 03 907 entgegenstehenden Nachteil besteht hier einmal darin, daß die Kunststoffummantelung der Spannvorrichtung den beim Betätigen derselben auftretenden hohen Kräften auf Dauer nicht standzuhalten vermag, so daß das spannschloß nach vergleichsweise kurzer Betriebszeit wegen Verschleißes der Spannvorrichtung unbrauchbar wird. Eine denkbare Herstellung der Spannvorrichtung gänzlich aus Metall scheidet aus, weil die Spannvorrichtung hierfür konstruktiv zu kompliziert ausgebildet ist. Aber auch der metallische Kern der bekannten, mit Kunststoff ummantelten Spannvorrichtung läßt sich aufgrund seiner komplizierten Gestaltung nur unter hohem Kostenaufwand fertigen.

Aufgabe der vorliegenden Erfindung ist es, eine Anordnung der eingangs bezeichneten Art mit einem Spannschloß zu schaffen, welches in seiner Funktion exakt, zuverlässig und dauerhaft arbeitet, sich zugleich aber unter vertretbarem Kostenaufwand herstellen läßt.

Nach der Erfindung wird die Aufgabe bei einer gattungsmäßigen Anordnung durch die im kennzeichnenden Teil des Patentanspruchs 1 angegebenen Merkmale gelöst.

Die erfindungsgemäße Spannvorrichtung, die aus Festigkeitsgründen aus Metall bestehen sollte, läßt sich in einfacher und kostengünstiger Weise herstellen bzw. bearbeiten. Eine spanlose Formung der Spannvorrichtung ohne anschließende Nacharbeit läßt sich - vorzugsweise - dadurch realisieren, daß die Spannvorrichtung bzw. deren Bestandteile aus Sintermetall und/oder aus Druckguß bestehen. Es ist aber auch eine Herstellung der Spannvorrichtung aus Stahl denkbar. In diesem Fall ist eine spanabhebende Bearbeitung (durch Drehen, Fräsen etc.) möglich.

Die erfindungsgemäße Spannvorrichtung ermöglicht aufgrund ihrer abgeschrägten Innenflächen ein einfaches, zuverlässiges Schließen und Öffnen des Spannschlosses, wozu lediglich maximal eine halbe Umdrehung (180°-Drehung) der Spannvorrichtung erforderlich ist. (Je nach konstruktiver Gestaltung und Toleranzen der durch das Spannschloß miteinander zu verbindenden Elemente kann sich in vielen Fällen auch ein Spannwinkel von weit weniger als 180° als ausreichend erweisen.)

Eine kostspielige exzentrische Gestaltung der Spannvorrichtung entfällt. Kostengünstig bei der Herstellung des erfindungsgemäßen Spannschlosses wirkt sich auch die einteilige Ausführung der beiden seitlichen Halteelemente aus. Darüber hinaus hat diese Konzeption aber den wesentlichen Vorteil, daß hierdurch in einfacher Weise ein selbsttätiges federndes Rückstellen der seitlichen Halteelemente aus ihrer Schließstellung erreichber ist, sobald die Spannvorrichtung gelöst wird.

Ein weiterer, durch die erfindungsgemäße Anordnung erzielter Vorteil besteht darin, daß sich die Spannvorrichtung beim Schließen des Spannschlosses (Verspannen der beiden seitlichen Halteelemente) aufgrund der Reaktionskraft (Federwiderstand) der seitlichen Halteelemente beidseitig nach außen gegen die Innenwandung der Hohlprofilzarge drückt, so daß dadurch das gesamte Spannschloß kraftschlüssig innerhalb der Hohlprofilzarge fixiert wird.

Im Sinne einer konstruktiv einfachen und kostensparenden Realisierung des erfindungsgemäßen Spannschlosses wirken sich auch die aus Patentanspruch 2 entnehmbaren Merkmale aus. Durch die einstückige Ausführung von Schloßgehäuse und mittlerem Halteelement, zusammen mit dem beidseitig gleichmäßigen Schließen der seitlichen Halteelemente, wird überdies vorteilhafterweise ein einwandfreies, exaktes Positionieren und Zentrieren des Spannschlosses und damit auch der betreffenden Hohlprofilzarge (Träger) am zugeordneten Stützenprofil gewährleistet.

Vorteilhafte Weiterbildungen der Erfindung, die sich insbesondere in fertigungstechnischer und kostenmäßiger Hinsicht günstig auswirken, sind den Patentansprüchen 3 - 5 zu entnehmen.

Eine vorteilhafte Weiterbildung und nützliche Anwendung der Merkmale des Patentanspruchs 5 beinhaltet Patentanspruch 8. Es ergibt sich hierdurch eine zuverlässige Begrenzung auf den maximal möglichen und zulässigen Drehwinkel (180°) bei der Betätigung der Spannvorrichtung. Einem Überdrehen derselben wird hiermit vorgebeugt.

Durch die aus Patentanspruch 6 hervorgehenden, sich auf eine spezielle Ausgestaltung der Spannvorrichtung beziehenden Merkmale wird eine leichte Montierbarkeit der Spannvorrichtung ermöglicht.

Durch die Merkmale des Patentanspruchs 7 läßt sich in einfacher Weise bei genauer Maßhaltigkeit, dabei aber ohne aufwendige Nacharbeit, die Herstellung der erfindungsgemäßen Spannvorrichtung aus einem ausreichende Festigkeit garantierenden Metall realisieren.

Die aus patentanspruch 9 hervorgehende, bevorzugte, Gestaltung der seitlichen Halteelemente ermöglicht eine exakte und zuverlässige Betätigung durch die Schrägflächen an den Scheibenteilen der Spannvorrichtung.

Zur Veranschaulichung und näheren Erläuterung der Erfindung dient ein Ausführungsbeispiel, das in der Zeichnung dargestellt ist und im folgenden beschrieben wird. Es zeigt:
- Fig. 1: - in Draufsicht (teilweise aufgebrochen) und in vergrößerter Darstellung - eine Ausführungsform einer erfindungsgemäßen Anordnung, mit in Eingriffsstellung befindlichem Spannschloß,
- Fig. 2: eine Seitenansicht des Spannschlosses nach Fig. 1 (Träger und Stützenprofil weggelassen),
- Fig. 3: das Gehäuse des aus Fig. 1 und 2 ersichtlichen Spannschlosses, in perspektivischer Separatdarstellung (natürliche Größe),
- Fig. 4: die beiden seitlichen Halteelemente des Spannschlosses nach Fig. 1 und 2 in perspektivischer Separatdarstellung (natürliche Größe),
- Fig. 5: ein Spannvorrichtungselement der zweiteiligen Spannvorrichtung des Spannschlosses nach Fig. 1 und 2 in Seitenansicht (natürliche Größe),
- Fig. 6: den Gegenstand von Fig. 5, in Pfeilrichtung A (Fig. 5) betrachtet,
- Fig. 7: den Gegenstand von Fig. 5, in Pfeilrichtung B (Fig. 5) betrachtet,
- Fig. 8: das andere Spannvorrichtungselement der zweiteiligen Spannvorrichtung des Spannschlosses nach Fig. 1 und 2 in Seitenansicht (natürliche Größe),
- Fig. 9: den Gegenstand von Fig. 8, in Pfeilrichtung C (Fig. 8) betrachtet, und
- Fig. 10: das Spannschloß nach Fig. 1 und 2, in perspektivischer Separatdarstellung.

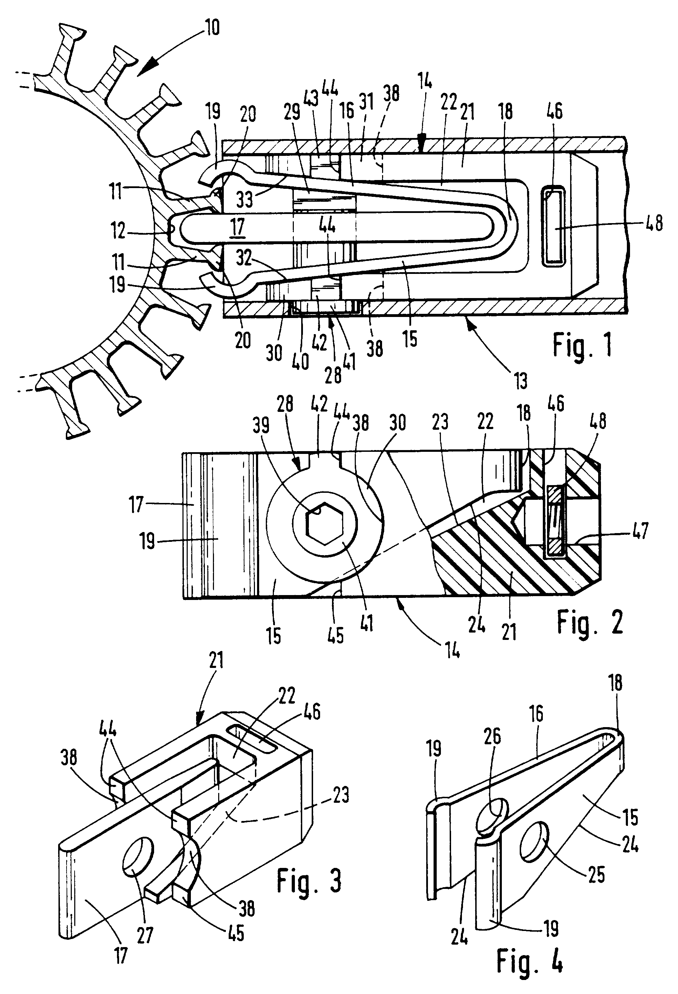

In Fig. 1 bezeichnet 10 ein als gezogenes Hohlzylinderprofil ausgebildetes Stützenprofil, welches an seinem Umfang eine durch 3 und 4 teilbare Zahl von Abgängen, vorzugsweise 24 Abgänge in Form von im Querschnitt T-förmigen Stegen 11 mit dazwischenliegenden Nuten 12 aufweist. An dem Stützenprofil 10 ist - in radialer Anordnung - ein Träger 13 befestigt, an dem wiederum Wand- oder Deckenteile (nicht gezeigt) in geeigneter Weise angebracht sein können.

Zur Befestigung des Trägers 13 am Stützenprofil 10 dient ein separates Spannschloß, welches insgesamt mit 14 beziffert ist.

Es besitzt drei Halteelemente 15, 16 und 17, die jeweils radial in drei benachbarte Nuten 12 zwischen vier benachbarten Stegen 11 des Stützenprofils 10 eingreifen. Die Abstände der Stege 11 und die Abmessungen der Halteelemente 15, 16 und 17 an ihren dem Stützenprofil 10 zugewandten Enden sind so aufeinander abgestimmt, daß die Halteelemente 15, 16, 17 im unverspannten Zustand radial von außen in die Nuten 12 zwischen den Stegen 11 des Stützenprofils eingeführt werden können.

Wie weiterhin aus Fig. 1 und 4 ersichtlich ist, sind die beiden seitlichen Halteelemente 15, 16, welche aus Federstahl bestehen, an ihren rückwärtigen Enden (bei 18) miteinander verbunden, so daß sie ein etwa V-förmiges einteiliges Bauteil bilden. An ihrem dem Stützenprofil 10 zugewandten vorderen Ende weisen die seitlichen Halteelemente 15, 16 jeweils eine klauenartige Krümmung 19 auf, mit denen im verspannten Zustand des Spannschlosses 14 die verdickten Enden 20 der Stege 11 des Stützenprofils 10 hintergriffen werden.

Wie des weiteren aus Fig. 1 hervorgeht (siehe aber auch Fig. 10), sind die beiden seitlichen Halteelemente 15, 16 symmetrisch zu dem bereits erwähnten mittleren Halteelement 17 angeordnet. Das mittlere Halteelement 17 greift mit seinem vorderen (stützenprofilseitigen) Ende zwischen zwei benachbarte Stege 11 des Stützenprofils 10 ein. Fig. 1 macht deutlich, daß die Breite des mittleren Halteelements 17 exakt dem Abstand der beidseitig angeordneten benachbarten Stege 11 des Stützenprofils 10 entspricht, so daß diese sich, wenn sie von außen durch die Klauen 19 der seitlichen Halteelemente 15, 16 beaufschlagt werden, innen an dem mittleren Halteelement 17 abstützen können.

Wie weiterhin aus der Zeichnung, insbesondere Fig. 1, 2 und 10, hervorgeht, sind die drei Halteelemente 15, 16 und 17 in einem insgesamt mit 21 bezifferten Spannschloßgehäuse angeordnet (siehe hierzu auch die perspektivische Separatdarstellunge desselben in Fig. 3). Das Spannschloßgehäuse 21 besteht aus Kunststoff und ist vorzugsweise (wegen der einfachen und kostensparenden Herstellung) als Spritzteil ausgebildet.

Eine Besonderheit liegt nun darin, daß das mittlere Halteelement 17 einstückig an das Spannschloßgehäuse 21 angeformt ist. Die beiden für sich ebenfalls ein gemeinsames Bauteil bildenden seitlichen Halteelemente 15, 16 sind in einer speziellen, etwa U-förmigen Aussparung 22 des Spannschloßgehäuses 21 angeordnet. Zu diesem Zweck besitzt die U-förmige Aussparung 22 eine von hinten nach vorn (in Richtung Stützenprofil 10, Fig. 1) abfallende Schrägfläche 23 (siehe Fig. 2 und 3), und die seitlichen Halteelemente 15, 16 sind ebenfalls entsprechend abgeschrägt ausgebildet (vgl. Fig. 2 und 4), wobei die Schrägflächen der seitlichen Halteelemente 15, 16 mit 24 beziffert sind. Hierdurch ergibt sich bei den seitlichen Halteelementen 15, 16 die schmalste Materialerstreckung an der Verbindungsstelle 18.

Wie die Zeichnung, insbesondere Fig. 3 und 4, weiterhin deutlich macht, sind in die drei Halteelemente 15, 16 und 17 Bohrungen 25, 26 bzw. 27 eingearbeitet, die in Zusammenbauposition des Spannschlosses 14 zueinander fluchten und zur Aufnahme einer insgesamt mit 28 bezeichneten Spannvorrichtung dienen (vgl. Fig. 1, 2 und 10).

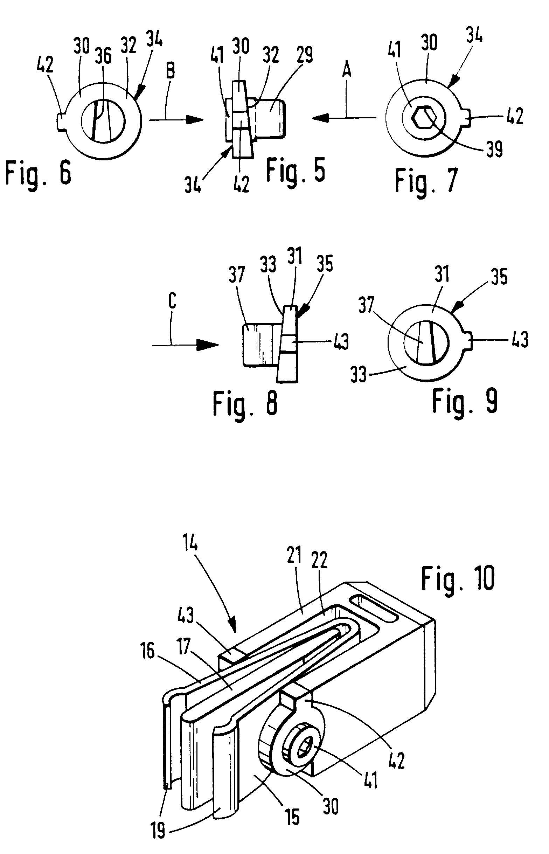

Eine Separatdarstellung dieser Spannvorrichtung in ihren Bestandteilen zeigen die Fig. 5 - 9. Demgemäß weist die Spannvorrichtung 28 einen die Bohrungen 25, 26, 27 der Halteelemente 15, 16, 17 durchsetzenden mittleren zylindrischen Teil 29 und zwei an den Enden desselben befindliche Scheibenteile 30 und 31 auf. In Montageposition (Fig. 1, 2 und 10) schließen die beiden Scheibenteile 30, 31 der Spannvorrichtung 28 die beiden seitlichen Halteelemente 15, 16 (und auch das mittlere Halteelement 17) zwischen sich ein. Jedes Scheibenteil - 30 bzw. 31 - besitzt eine abgeschrägte Innenfläche 32 bzw. 33, mit der es an dem jeweils zugeordneten seitlichen Halteelement 15 bzw. 16 anliegt (siehe insbesondere Fig. 1). Die Schräge der Innenflächen 32, 33 der Scheibenteile 30, 31 entspricht also in etwa der durch das zugeordnete seitliche Halteelement (15 bzw. 16) gebildeten Ebene.

Eine weitere Besonderheit der Spannvorrichtung 28 besteht darin, daß diese sich - wie insbesondere aus Fig. 5 - 9 hervorgeht - aus zwei Spannvorrichtungselementen 34 (Fig. 5 - 7) und 35 (Fig. 8 und 9) zusammensetzt. Hierbei ist jedem Spannvorrichtungselement - 34 bzw. 35 - eines der Scheibenteile - 30 bzw. 31 - zugeordnet. Wie Fig. 5 - 7 zeigen, besteht das eine Spannvorrichtungselement 34 aus dem Scheibenteil 30 und dem damit fest verbundenen mittleren zylindrischen Teil 29, in welches letztere ein axialer Schlitz 36 mit im Winkel zueinander stehenden Wänden eingearbeitet ist (siehe insbesondere Fig. 6). Bei dem anderen Spannvorrichtungselement 35 (Fig. 8 und 9) ist an das Scheibenteil 31 ein abgeflachter Mitnehmer 37 angeformt, dessen Konturen komplementär den Konturen des axialen Schlitzes 36 am zylindrischen Teil 29 ausgebildet sind (vergleiche insbesondere Fig. 6 und 9).

In Montagestellung des Spannschlosses 14 (Fig. 1, 2 und 10) greift der Mitnehmer 37 des Spannvorrichtungselements 35 (Fig. 8 und 9) in den axialen Schlitz 36 des Spannvorrichtungselements 34 (Fig. 5 - 7) ein und stellt somit eine drehfeste, jedoch axial verschiebliche Verbindung der beiden die Spannvorrichtung 28 bildenden Elemente 34, 35 her. Durch die winkligen Begrenzungswände des Schlitzes 36 einerseits und des Mitnehmers 37 andererseits wird eine funktionsgerechte Zuordnung der beiden Spannvorrichtungselemente 34, 35 gewährleistet, wodurch Montagefehler vermieden werden.

Als weitere Besonderheit ist zu erwähnen, daß das Spannschloßgehäuse 21 nur bis an die kreisförmige Umfangskonturen aufweisenden Scheibenteile 30, 31 heranreicht (siehe insbesondere Fig. 2, 3 und 10). Die angrenzenden Flächen 38 des Spannschloßgehäuses 21 sind entsprechend teilkreisbogenförmig gestaltet.

Um das Spannschloß 14 in Schließstellung am Stützenprofil 10 (Fig. 1) zu bringen, ist ein Drehen der Spannvorrichtung 28 zu bewerkstelligen. Diese besitzt hierzu eine sechskantförmige Vertiefung 39 zur Betätigung durch einen entsprechenden Sechskantschlüssel. Zur Verstellung des Spannschlosses 14 von der Öffnungsstellung (Fig. 1) in die Schließstellung genügt aufgrund der (inneren) Schrägflächen 32, 33 der Spannvorrichtung 28 ein Spannwinkel von maximal 180^{o}, was (maximal) nur einer halben Umdrehung der Spannvorrichtung entspricht. Die beiden seitlichen Halteelemente 15, 16 werden hierbei entgegen ihrem Federwiderstand zusammengedrückt, wobei ihre klauenartigen Enden 19 die Verdickungen 20 an den Stegen 11 des Stützenprofils fest hintergreifen.

Der Lösevorgang der Spannvorrichtung 28 (Verstellen des Spannschlosses 14 in Öffnungsstellung) erfolgt in entsprechender Weise, d. h. durch Drehen der Spannvorrichtung 28 um (maximal) 180^{o}, allerdings in umgekehrtem Drehsinn wie beim Schließvorgang. Infolge der federnden Ausbildung der seitlichen Halteelemente 15, 16 spreizen sich diese selbsttätig auseinander, und das Spannschloß (zusammen mit dem an ihm angreifenden Träger 13) kann vom Stützenprofil 10 gelöst und wegbewegt werden.

Ein Überdrehen der Spannvorrichtung 28 wird vorteilhafterweise dadurch vermieden, daß am Umfang jedes der beiden Scheibenteile - 30 bzw. 31 - ein radial gerichteter Fortsatz 42 bzw. 43 als Anschlag angeformt ist, der am Ende des jeweiligen Betätigungsvorganges mit angrenzenden Flächen 44 bzw. 45 des Schloßgehäuses 21 zur Anlage kommt.

Zur Fixierung des Spannschlosses 14 in dem als Hohlzargenprofil ausgebildeten Träger 13 ist noch folgendes zu bemerken. Wie Fig. 1 erkennen läßt, weist der Träger 13 eine seitliche Bohrung 40, in die die Spannvorrichtung 28 mit einem am Scheibenteil 30 angedrehten Fortsatz 41 (siehe auch Fig. 2, 5 und 7) eingreift. Hierdurch ergibt sich eine formschlüssige Fixierung des Spannschlosses 14 innerhalb des Trägers 13. Wenn das Spannschloß 14 in Schließstellung gebracht wird bzw. sich in dieser befindet (vgl. hierzu die obigen Ausführungen), erfolgt durch die federnde Reaktionskraft der zusammengedrückten seitlichen Halteelemente 15, 16 einerseits und die axiale Verschieblichkeit der Spannvorrichtungselemente 34, 35 andererseits ein seitliches Abstützen der Scheibenteile 30, 31 an den Innenwänden des Trägers 13, wodurch in vorteilhafter Weise zugleich eine (zusätzliche) kraftschlüssige Verbindung zwischen Spannschloß 14 und Träger 13 bewirkt wird.

Gleichzeitig folgt - vorteilhafterweise - aus dem seitlichen Abstützen der Scheibenteile 30, 31 am Träger 13 eine Entlastung der Scheibenteile 30, 31 hinsichtlich ihrer Biegebeanspruchung beim Verspannen der beiden seitlichen Halteelemente 15, 16.

Eine weitere Besonderheit des in der Zeichnung dargestellten Ausführungsbeispiels (siehe insbesondere Fig. 1, 2 und 3) besteht darin, daß im rückwärtigen Bereich des Spannschloßgehäuses 21 ein vertikaler Schlitz 46 eingearbeitet ist, der im rechten Winkel von einer Bohrung 47 geschnitten wird. In dem Schlitz 46 ist eine Schraubenmutter 48 angeordnet, die vorzugsweise als Vierkant ausgebildet ist. Wie insbesondere Fig. 2 erkennen läßt, sind Schlitz 46 und Bohrung 47 so einander zugeordnet, daß die in den Schlitz 46 eingesetzte Vierkantmutter 48 durch eine in die Bohrung 47 eingeführte Schraube (nicht gezeigt) erreicht werden kann. Die vorgenannten Maßnahmen dienen dem Zweck, zusätzliche Elemente (die beliebiger Natur sein können) am rückwärtigen Bereich des Spannschlosses 14 zu befestigen.

Alternativ ist es aber auch möglich - und diese Variante wird zu bevorzugen sein, wenn eine reduzierte Längserstreckung des Spannschloßgehäuses 21 erwünscht bzw. erforderlich ist, - den vertikalen Schlitz 46 wegzulassen, vielmehr lediglich ein axiales Loch (entsprechend der "Bohrung 47") in das Spannschloßgehäuse 21 einzuspritzen. Dieses axiale Loch kann dann - im Bedarfsfall - als Kernloch für ein (einzuschneidendes) Gewinde dienen.

## Patentansprüche

1. Anordnung zur Erstellung von Wand- und/oder Deckenkonstruktionen, insbesondere im Messebau, als Messepavillon, Freigeländestand, ein- oder mehrgeschossiger Hallenstand und dergleichen, mit einem Stützenprofil (10), an dessen im Querschnitt etwa T-förmigen Stegen (11) mindestens ein Träger (13) für Wand- und/oder Deckenteile lösbar befestigt ist, und mit einem innerhalb des hohl ausgebildeten Trägers (13) lösbar befestigten Spannschloß (14), das ein mittleres Halteelement (17) und zwei symmetrisch zu diesem angeordnete seitliche Halteelemente (15, 16) aus Federstahl aufweist, wobei die drei Halteelemente (15, 16, 17) in Montagestellung der Anordnung in benachbarte hinterschnittene, von den Stegen (11) des Stützenprofils (10) gebildete Nuten (12) eingreifen und hierbei durch eine quer gerichtete, die drei Halteelemente (15, 16, 17) in zueinander fluchtenden Ausnehmungen (25, 26, 27) durchsetzende, durch Drehung betätigbare Spannvorrichtung (28) gegen zwei benachbarte Stege (11) des Stützenprofils (10) verspannt sind, und wobei das Spannschloß (14) durch die Spannvorrichtung (28) zugleich innerhalb des Trägers (13) fixiert ist,
dadurch gekennzeichnet, daß die beiden seitlichen federnden Halteelemente (15, 16) an ihren vom Stützenprofil (10) abgewandten rückwärtigen Enden (bei 18) einstückig miteinander verbunden und in einem Spannschloßgehäuse (21) angeordnet sind, das auch das mittlere Halteelement (17) und die drehbare Spannvorrichtung (28) aufnimmt, und daß die Spannvorrichtung (28) aus zwei in Axialrichtung zueinander verschiebbaren und lösbaren, in Montagestellung jedoch drehfest miteinander verbundenen Spannvorrichtungselementen (34, 35) besteht und daß die Spannvorrichtung (28) einen die drei Halteelemente (15, 16, 17) in zueinander fluchtenden Bohrungen (25, 26, 27) durchsetzenden mittleren zylindrischen Teil (29) und zwei an den Enden desselben befindliche, die beiden seitlichen Halteelemente (15, 16) zwischen sich einschließende äußere Scheibenteile (30, 31) aufweist, deren Innenflächen (32, 33) mit je einem der beiden seitlichen Halteelemente (15, 16) in Anlage stehen, wobei jedem der beiden Spannvorrichtungselemente (34, 35) eines der Scheibenteile (30, 31) zugeordnet ist, und daß die Innenflächen (32, 33) der beiden Scheibenteile (30, 31) jeweils eine der durch das zugeordnete seitliche Halteelement (15 bzw. 16) gebildeten Ebene entsprechende Betätigungsschräge besitzen und daß die Außenflächen der Scheibenteile (30, 31) sich an den Innenwänden des Trägers (13) seitlich abstützen.

2. Anordnung nach Anspruch 1,
dadurch gekennzeichnet, daß das Spannschloßgehäuse (21) zusammen mit dem mittleren Halteelement (17) ein einstückiges Bauteil bildet und eine etwa U-förmige Aussparung (22) zur Aufnahme der beiden ebenfalls ein gemeinsames Bauteil bildenden seitlichen Halteelemente (15, 16) aufweist.

3. Anordnung nach Anspruch 2,
dadurch gekennzeichnet, daß die zur Aufnahme der seitlichen Halteelemente (15,16) dienende U-förmige Aussparung (22) im Spannschloßgehäuse (21) eine von hinten nach vorn (in Richtung Stützenprofil 10) abfallende Anlageschräge (23) für die seitlichen Halteelemente (15, 16) besitzt und die seitlichen Halteelemente (15, 16) ebenfalls entsprechend abgeschrägt (24) ausgebildet sind, derart, daß sie an ihrer rückwärtigen Verbindungsstelle (18) ihre schmalste Materialerstreckung haben und sich zu ihren freien Enden (19) hin (in Richtung Stützenprofil 10) stetig verbreitern.

4. Anordnung nach Anspruch 2 oder 3,
dadurch gekennzeichnet, daß das Spannschloßgehäuse (21) zusammen mit dem mittleren Halteelement (17) aus Kunststoff besteht und - vorzugsweise - als Spritzgußteil ausgebildet ist.

5. Anordnung nach einem oder mehreren der vorstehenden Ansprüche, Scheibenteile
dadurch gekennzeichnet, daß die beiden äußeren Scheibenteile (30, 31) der spannvorrichtung (28) kreisförmig ausgebildet sind und das Spannschloßgehäuse (21) beidseitig nur jeweils bis an die Scheibenteile (30, 31) heranreicht, hierbei mit diesen jeweils auf einem kreisbogenförmigen Abschnitt (38) zur Anlage kommend.

6. Anordnung nach einem der Ansprüche 1 bis 5,
dadurch gekennzeichnet, daß das eine Spannvorrichtungselement (34) aus einem Scheibenteil (30) und dem damit fest verbundenen mittleren zylindrischen Teil (29) besteht und daß dieser einen axialen Schlitz (36) aufweist, der mit einem am anderen Spannvorrichtungselement (35) ausgebildeten, etwa plattenförmigen Mitnehmer (37) formschlüssig zusammenwirkt.

7. Anordnung nach Anspruch 6,
dadurch gekennzeichnet, daß das den mittleren zylindrischen Teil (29) aufweisende eine Spannvorrichtungselement (34) aus Druckguß und das andere Spannvorrichtungselement (35) aus Sintermetall besteht.

8. Anordnung nach einem der Ansprüche 5 bis 7,
dadurch gekennzeichnet, daß zumindest an einem Scheibenteil (30 bzw. 31), vorzugsweise an beiden Scheibenteilen (30, 31) der Spannvorrichtung (28) ein radial gerichteter Fortsatz (42, 43) als Anschlag ausgebildet ist, der mit den vorderen (stützenprofilseitigen) Kanten (44, 45) des Spannschloßgehäuses (21) als Gegenanschlag zusammenwirkt.

9. Anordnung nach einem der Ansprüche 1 bis 8,
dadurch gekennzeichnet, daß die ein einteiliges Bauteil bildenden seitlichen Halteelemente (15, 16), ausgehend von ihrer Verbindungsstelle (18), in Richtung ihrer freien Enden (19) divergieren, derart, daß das einteilige Bauteil (15, 16) im wesentlichen V-förmig ausgebildet ist.

## Claims

1. A device for erecting walls and or ceilings especially for exhibition purposes as at fairs and to be used as exhibition pavilions, free-standing structures, single- or multi-story lobby booths and the like, comprising a support shaped-section (10), a beam (13) for wall- and/or ceiling segments being detachably affixed to approximately cross-sectionally T-shaped webs (11) of said support shaped-section (10), said device further comprising a clamping lock (14) detachably affixed to the inside of said beam (13) which is hollow, said lock (14) comprising a central retaining element (17) and two springsteel lateral retaining elements (15, 16) arranged symmetrically relative to said central retaining element (17), the three retaining elements (15, 16, 17) in the assembly position of said device entering undercut channels (12) defined by the webs (11) of the support shaped-section (10) and at the same time being tightened, by a rotationally driven tightening system (28) passing through mutually flush clearances (25, 26, 27), against two adjacent webs (11) of the support shaped-section (10), and the clamping lock (14) being simultaneously affixed inside the beam (13) by the tightening system (28),
characterized in that the two lateral, elastic retaining elements (15, 16) are integrally joined (at 18) at their rear ends away from the support shaped-section (10) and are mounted in a clamping-lock housing (21) also receiving the central retaining element (17) and the rotatable tightening system (28), and in that the tightening system (28) comprises two axially mutually displaceably and detachable tightening-system components (34, 35) which however in the assembled position are linked together to be mutually irrotational, and in that the tightening system (28) further comprises a central, cylindrical part (29) crossing the three retaining elements (15, 16, 17) through mutually flush boreholes (25, 26, 27) and further comprises two external washers (30, 31) located at the ends of said central, cylindrical part (29) and enclosing between them the two lateral retaining elements (15, 16), the said washers (30, 31) comprising inner surfaces (32, 33) being in contact with each of the lateral retaining elements (15, 16), one of the washers (30, 31) being associated to each of the two tightening-system components (34, 35), and in that the inner surfaces (32, 33) of said external washers (30, 31) each comprising an actuation slanting surface corresponding to the plane subtended by the associated retaining element (15, 16) respectively, and in that the external surfaces of the washers (30, 31) are laterally supported by the inner surfaces of the beam (13).

2. Device defined in claim 1,
characterized in that the clamping-lock housing (21) is integral with the central retaining element (17) and comprises an approximately U-shaped clearance (22) receiving the two lateral retaining elements (15, 16) which also form an integral component.

3. Device defined in claim 2,
characterized in that the U-shaped clearance (22) located in the clamping-lock housing (21) and receiving the lateral retaining elements (15, 16) evinces a rest surface (23) sloping downward from the rear to the front (toward the support shaped-section) for the purpose of supporting the lateral retaining elements (15, 16) and in that the said retaining elements (15, 16) are slanting (24) in corresponding manner in such a way that their rear junction (18) is the narrowest and that they continuously widen toward their free ends (19) (in the direction of the support shaped-section 10).

4. Device defined in claim 2 or 3,
characterized in that the clamping-lock housing (21) together with the central retaining element (17) is made of plastic and preferably is made by injection molding.

5. Device defined in one or more of the foregoing claims,
characterized in that the two external washers (30, 31) of the tightening system (28) are circular and in that the clamping-lock housing (21) only extends on each side as far as the washers (30, 31) and rests against them in each case by a circular segment (38).

6. Device defined in one of claims 1 to 5,
characterized in that one (34) of the tightening-system components consists of a washer (30) and of the central, cylindrical part (29) rigidly fastened to it, and in that said central, cylindrical part (29) comprises an axial slot (36) which cooperates with a geometrically locking and approximately lamellar drive (37).

7. Device defined in claim 6,
characterized in that the tightening-system component (34) comprising the cental, cylindrical part (29) is die cast and in that the other tightening-system component (35) is a sintered metal.

8. Device defined in one of claims 5 to 7,
characterized in that a radially directed projection (42, 43) is present as a stop at least on one washer (30 or 31), preferably on both washers (30, 31) of the tightening system (28), and cooperates with the front edges (44, 45) (on the side of the support shaped-section) of the clamping-lock housing (21) as the stop-matching surface.

9. Device defined in one of claims 1 to 8,
characterized in that retaining elements (15, 16) forming an integral component and starting from their junction (18) diverge toward their free ends (19) in such manner that the integral component (15, 16) substantially assumes a V-shape.

## Revendications

1. Agencement pour l'érection de constructions constituées de parois et/ou de plafonds, notamment pour la construction foraine, telles que des pavillons de foire, stands édifiés à l'air libre, stands de halles à un ou plusieurs étages et analogues, comprenant un profilé d'appui (10) aux ailes (11) duquel on peut fixer de manière amovible au moins une poutre (13) de parties de cloisons et/ou de plafonds, lesdites ailes (11) présentant une section transversale approximativement en T, et un organe de serrage (14) fixé de façon démontable à l'intérieur de la poutre (13) de configuration creuse, qui comporte un élément de retenue central (17) et deux éléments de retenue latéraux (15, 16) en acier à ressorts symétriquement arrangés à l'élément de retenue central (17), les trois éléments de retenue (15, 16, 17) en position de montage de l'agencement engrenant dans des rainures (12) voisines dépouillées en coupant, lesdites rainures (12) étant formées par les ailes (11) du profilé d'appui (10) et en même temps les éléments de retenue (15, 16, 17) étant haubanées contre deux ailes (11) voisines du profilé d'appui (10) par un dispositif de serrage (28) opéré par rotation, ledit dispositif de serrage (28) étant transversalement aligné et traversant les trois éléments de retenue (15, 16, 17) en perçages (25, 26, 27) s'alignants, et l'organe de serrage (14) en même temps étant fixé à l'intérieur de la poutre (13) par le dispositif de serrage (28),
caractérisé en ce que les deux éléments de retenue latéraux (15, 16) élastiques, à leurs extrémités à l'arrière (à 18) détournées du profilé d'appui (10), sont indivisamment assemblés et arrangés dans une cage d'organe de serrage (21), qui contient aussi l'élément de retenue central (17) et le dispositif de serrage (28) rotatif, et que le dispositif de serrage (28) consiste de deux éléments de dispositif de serrage (34, 35), qui sont, l'un à l'autre, déplacables en direction axiale et amovibles, pourtant non-rotativement assemblés en position de montage, et que le dispositif de serrage (28) présente une part cylindrique centrale (29), qui traverse les trois éléments de retenue (15, 16, 17) en perçages (25, 26, 27) s'alignants l'un à l'autre, et présente de plus - aux bouts de la part cylindrique centrale (29) - deux parts extérieures en forme de disques (30, 31), qui enferment entre elles les deux éléments de retenue lateraux (15, 16), les surfaces intérieures (32, 33) desdites parts extérieures en forme de disques (30, 31) étant adjacentes respectivement à un des deux éléments de retenue latéraux (15, 16), à chacun des deux éléments de dispositif de serrage (34, 35) étant adjointe une des deux parts en forme de disques (30, 31), et que les surfaces intérieures (32, 33) des deux parts en forme de disques (30, 31) respectivement possèdent une obliquité d'opération, qui répond au plan formé par l'adjoint élément de retenue latéral (15 respectivement 16), et que les surfaces extérieures des parts en forme de disques (30, 31) s'appuyent latéralement aux parois intérieurs du poutre (13).

2. Agencement selon la revendication 1,
caractérisé en ce que la cage d'organe de serrage (21), en commun avec l'élément de retenue central (17), forme un élément de construction indivisé et présente un évidement approximativement en U (22) pour recevoir les deux éléments de retenue latéraux (15, 16) qui également forment un élément de construction commun.

3. Agencement selon la revendication 2,
caracterisé en ce que l'evidement en U (22) qui sert à recevoir des éléments de retenue latéraux (15, 16) possède une obliquité adjacente (23) dans la cage d'organe de serrage (21) pour les éléments de retenue latéraux (15, 16), ladite obliquité adjacente (23) allant en pente de l'arrière en avant (en direction du profilé d'appui 10), et que les éléments de retenue latéraux (15, 16) sont également latéralement biseautés adéquatement, si bien qu'ils ont leur extension de matière la plus étroite à leur jointure rétrograde (18) et qu'ils s'élargissent constamment jusqu'à leurs bouts (19) (en direction du profilé d'appui 10).

4. Agencement selon la revendication 2 ou 3,
caracterisé en ce que la cage d'organe de serrage (21) en commun avec l'élément de retenue central (17) consiste en matière plastique et - de préférance - est fabriquée comme pièce moulée par injection.

5. Agencement selon une ou plusieures des revendications précédentes,
caractérisé en ce que les deux parts extérieures en forme de disques (30, 31) du dispositif de serrage (28) sont formées en forme circulaire et que la cage d'organe de serrage (21) des deux cotés n'atteint respectivement qu'aux parts en forme de disques (30, 31), pendant ce temps entrant en rapport avec lesdites parts en forme de disques (30, 31) chaque fois sur une section de cercle (38).

6. Agencement selon l'une quelconque des revendications 1 à 5,
caractérisé en ce que l'un élément de dispositif de serrage (34) consiste en une part en forme de disque (30) et la part cylindrique centrale (29) fixée à la part en forme de disque (30), et que ladite part cylindrique centrale (29) présente une fente axiale (36) qui coopère commandée mécaniquement avec un guide approximativement en forme de plaque (37), qui est formé à l'autre élément de dispositif de serrage (35).

7. Agencement selon la revendication 6,
caractérisé en ce que l'élément de dispositif de serrage (34) qui présente la part cylindrique centrale (29) consiste en moulage sous pression et l'autre élément de dispositif de serrage (35) consiste en métal fritté.

8. Agencement selon l'une quelconque des revendications 5 à 7,
caractérisé en ce que au moins à une part en forme de disque (30 respectivement 31), en préférence aux deux parts en forme de disques (30, 31) du dispositif de serrage (28), un appendice radial servant d'arrêt est formé qui coopère avec les arêtes de devant (44, 45) (sur le coté du profilé d'appui 10) de la cage d'organe de serrage (21) comme contre-arrêt.

9. Agencement selon l'une quelconque des revendications 1 à 8,
caractérisé en ce que les éléments de retenue latéraux formant un élément de construction indivisé, en partant de leur jointure (18), divergent en direction de leurs bouts (19), si bien que l'élément indivisé (15, 16) est essentiellement formé en V.
